# FASCICULE DE BREVET EUROPEEN

(11) **EP 3 759 936 B1**
(45) Date de publication et mention de la délivrance du brevet: **20.09.2023**
(21) Numéro de dépôt: 19706677.2
(22) Date de dépôt: 26.02.2019
(51) Int. Cl.: H04Q 9/00, G01D 4/00, H04B 3/54

(54) **PROCÉDÉ DE TRANSMISSION PAR UN COMPTEUR ÉLECTRIQUE INTELLIGENT D'UN MESSAGE REPRÉSENTATIF D'UNE DÉTECTION D'UNE RUPTURE D'UNE ALIMENTATION ÉLECTRIQUE**
VERFAHREN ZUR ÜBERTRAGUNG MITTELS EINES INTELLIGENTEN ELEKTRISCHEN ZÄHLERS, WOBEI EINE NACHRICHT DIE ERKENNUNG EINES FEHLERS IN DER ELEKTRISCHEN STROMVERSORGUNG DARSTELLT
METHOD FOR TRANSMITTING, BY MEANS OF A SMART ELECTRIC METER, A MESSAGE REPRESENTING THE DETECTION OF A FAILURE IN THE ELECTRICAL POWER SUPPLY

(30) Priorité: 01.03.2018 FR 1851810
(43) Date de publication de la demande: 06.01.2021
(73) Titulaire: Sagemcom Energy & Telecom SAS, 92500 Rueil-Malmaison (FR)
(72) Inventeur: TEBOULLE, Henri, 92500 Rueil Malmaison (FR)
(74) Mandataire: Cabinet Le Guen Maillet
(86) Numéro de dépôt international: PCT/EP2019/054747
(87) Numéro de publication internationale: WO 2019/166440

(56) Documents cités:
- EP-A1- 2 472 231
- EP-A1- 2 503 299
- EP-A1- 3 122 061

## Description

La présente invention concerne un procédé de transmission par un compteur électrique intelligent d'un message représentatif d'une détection d'une rupture d'une alimentation électrique, un système et un dispositif mettant en oeuvre le procédé.

Les réseaux de communication par courants porteurs en ligne (« PowerLine Communications » en terminologie anglo-saxonne) pour des systèmes de type AMM (« Automated Meter Management » en terminologie anglo-saxonne) ont fait leur apparition ces dernières années. Parmi ces réseaux, dits réseaux CPL (Courants Porteurs en Ligne), on peut citer les réseaux conformes aux spécifications PRIME (« PoweRline Intelligent Metering Evolution » en terminologie anglo-saxonne) ou les réseaux conformes au standard G3-PLC spécifié dans la recommandation ITU-T G.9903. Dans les réseaux CPL, des communications sont établies entre des compteurs électriques, dits intelligents (« smart electrical meters » en terminologie anglo-saxonne), et un dispositif appelé *concentrateur de données* (« data concentrator » en terminologie anglo-saxonne) pour permettre notamment une relève automatisée à distance de mesures de consommation électrique effectuées par lesdits compteurs électriques intelligents. On note qu'un concentrateur de données est parfois appelé *nœud de base* (« base node » en terminologie anglo-saxonne), ou *coordinateur* (« coordinator » en terminologie anglo-saxonne). Par la suite nous appelons simplement *compteur* chaque compteur électrique intelligent. Une pluralité de concentrateurs de données est typiquement géographiquement déployée dans un réseau CPL de manière à répartir la charge de gestion à distance d'une multitude de compteurs. Chaque concentrateur de données est lui-même connecté à une même entité de gestion du système de type AMM qui est gérée par un opérateur du réseau d'alimentation électrique auquel lesdits compteurs sont connectés.

Comme tout réseau de communication, un réseau CPL n'est pas à l'abri de pannes plus ou moins étendues. Du point de vue d'un compteur, ces pannes peuvent être provoquées par une rupture de l'alimentation électrique dudit compteur. Dans certains réseaux, tels que les réseaux DSL (« Digital Subscriber Line » en terminologie anglo-saxonne), un dispositif subissant une rupture d'alimentation électrique transmet un dernier message à un dispositif DSLAM (« digital subscriber Line Access Multiplexer » en terminologie anglo-saxonne) pour prévenir le dispositif DSLAM qu'il va s'arrêter suite à une rupture d'alimentation électrique. Pour ce faire, le dispositif subissant la rupture d'alimentation électrique utilise une réserve d'énergie interne lui permettant de « survivre » le temps de la transmission de ce message. Ce type de message est souvent désigné dans la littérature par l'expression anglo-saxonne message *dying gasp.* Nous l'appellerons par la suite *message de rupture d'alimentation.*

Dans un réseau CPL, lorsqu'un compteur subit une rupture d'alimentation électrique, c'est généralement qu'une grande partie du réseau CPL subit des ruptures d'alimentation électrique. Les signaux électriques étant le médium de transmission des informations dans les réseaux CPL, on comprend aisément que sans électricité dans le réseau CPL, une transmission de messages de rupture d'alimentation électrique par ce réseau CPL a peu de chances d'aboutir à son destinataire.

Il est souhaitable de pallier ces inconvénients de l'état de la technique. Il est notamment souhaitable de proposer une méthode qui permette à un compteur de transmettre de manière fiable un message de rupture d'alimentation électrique à une entité de gestion du système de type AMM.

Il est de plus souhaitable de fournir une solution qui soit simple à mettre en oeuvre et à faible coût.

Le document EP 3 122 061 A1 divulgue un procédé offrant deux alternatives pour permettre à des compteurs électriques intelligents de transmettre des informations à une entité de gestion, en utilisant soit un réseau de collecte primaire (CPL), soit un réseau de collecte secondaire (LPWAN).

Selon un premier aspect de la présente invention, la présente invention concerne un procédé de transmission d'un message représentatif d'une détection d'une rupture d'alimentation électrique d'un compteur électrique intelligent, dit compteur, à destination d'une entité de gestion dans un système de communication comportant en outre un premier réseau reliant des compteurs à un concentrateur de données et un deuxième réseau de communication reliant le concentrateur de données à l'entité de gestion, le système de communication comportant en outre un troisième réseau reliant les compteurs à une passerelle de collecte, dite passerelle, un quatrième réseau reliant la passerelle à un serveur, et un cinquième réseau, reliant le serveur à l'entité de gestion, chaque compteur comprenant une alimentation électrique générale et une alimentation électrique de secours, et passant sur son alimentation électrique de secours en cas de rupture de son alimentation électrique générale. Lorsqu'un compteur détecte une rupture de son alimentation électrique générale, le procédé comprend : générer, par ledit compteur, un message de rupture d'alimentation électrique destiné à l'entité de gestion, ledit message étant conforme à au moins un standard d'échange de données de mesure de consommation électrique utilisé par ladite entité ; transmettre, par ledit compteur, ledit message à destination de l'entité de gestion via une passerelle et le serveur, le message étant encapsulé dans une première trame lors de son passage par le troisième réseau, dans une deuxième trame lors de son passage par le quatrième réseau et dans une cinquième trame lors de son passage sur le cinquième réseau.

Dans un mode de réalisation, lorsque le compteur reçoit au moins un message de la part de l'entité de gestion, d'un concentrateur de données ou d'un autre compteur suite à la détection de la rupture d'alimentation, le compteur transmet en parallèle ledit message sur le premier réseau.

Dans un mode de réalisation, le message est conforme aux standards IEC 62056.

Dans un mode de réalisation, le troisième réseau est un réseau étendu à longue portée et à faible consommation d'énergie conforme au protocole LoRaWAN.

Dans un mode de réalisation, le premier réseau est conforme aux spécifications PRIME.

Dans un mode de réalisation, le premier réseau est conforme au standard G3-PLC.

Dans un mode de réalisation, l'entité de gestion transmet un accusé de réception à destination du serveur par l'intermédiaire du cinquième réseau suite à la réception dudit message.

Selon un deuxième aspect de l'invention, l'invention concerne un procédé de transmission d'un message représentatif d'une détection d'une rupture d'alimentation électrique d'un compteur électrique intelligent, dit compteur, à destination d'une entité de gestion dans un système de communication comportant en outre un premier réseau reliant des compteurs à un concentrateur de données et un deuxième réseau de communication reliant le concentrateur de données à l'entité de gestion, le système de communication comportant en outre un troisième réseau reliant les compteurs à une passerelle de collecte, dite passerelle, un quatrième réseau reliant la passerelle à un serveur, et un cinquième réseau, reliant le serveur à l'entité de gestion, chaque compteur comprenant une alimentation électrique générale et une alimentation électrique de secours, et passant sur son alimentation électrique de secours en cas de rupture de son alimentation électrique générale. Le procédé est exécuté par un compteur et comprend, lorsque ledit compteur détecte une rupture de son alimentation électrique générale : générer un message de rupture d'alimentation électrique destiné à l'entité de gestion, ledit message étant conforme à au moins un standard d'échange de données de mesure de consommation électrique utilisé par ladite entité ; et, transmettre ledit message à destination de l'entité de gestion via une passerelle et le serveur, le message étant encapsulé dans une première trame lors de son passage par le troisième réseau, dans une deuxième trame lors de son passage par le quatrième réseau et dans une troisième trame lors de son passage sur le cinquième réseau.

Selon un troisième aspect de l'invention, l'invention concerne un système de transmission d'un message représentatif d'une détection d'une rupture d'alimentation électrique d'un compteur électrique intelligent, dit compteur, à destination d'une entité de gestion dans un système de communication comportant en outre un premier réseau reliant des compteurs à un concentrateur de données et un deuxième réseau de communication reliant le concentrateur de données à l'entité de gestion, le système de communication comportant en outre un troisième réseau reliant les compteurs à une passerelle de collecte, dite passerelle, un quatrième réseau reliant la passerelle à un serveur, et un cinquième réseau, reliant le serveur à l'entité de gestion, chaque compteur comprenant une alimentation électrique générale et une alimentation électrique de secours, et passant sur son alimentation électrique de secours en cas de rupture de son alimentation électrique générale. Le système comprend : dans chaque compteur : des moyens de détection d'une rupture de l'alimentation électrique générale dudit compteur ; et, des moyens de génération pour générer un message de rupture d'alimentation électrique destiné à l'entité de gestion lorsqu'une rupture de l'alimentation électrique générale est détectée, ledit message étant conforme à au moins un standard d'échange de données de mesure de consommation électrique utilisé par ladite entité ; des moyens de transmission pour transmettre le message à destination de l'entité de gestion via une passerelle et le serveur ; et, dans l'entité de gestion, des moyens de transmission pour transmettre un accusé de réception à destination du serveur par l'intermédiaire du cinquième réseau suite à la réception dudit message.

Selon un quatrième aspect de l'invention, l'invention concerne un dispositif de transmission d'un message représentatif d'une détection d'une rupture d'alimentation électrique d'un compteur électrique intelligent, dit compteur, à destination d'une entité de gestion dans un système de communication comportant en outre un premier réseau reliant des compteurs à un concentrateur de données et un deuxième réseau de communication reliant le concentrateur de données à l'entité de gestion, le système de communication comportant en outre un troisième réseau reliant les compteurs à une passerelle de collecte, dite passerelle, un quatrième réseau reliant la passerelle à un serveur, et un cinquième réseau, reliant le serveur à l'entité de gestion, chaque compteur comprenant une alimentation électrique générale et une alimentation électrique de secours, et passant sur son alimentation électrique de secours en cas de rupture de son alimentation électrique générale. Le dispositif comprend : des moyens de détection pour détecter une rupture de l'alimentation électrique générale du compteur : des moyens de génération pour générer un message de rupture d'alimentation électrique destiné à l'entité de gestion, ledit message étant conforme à au moins un standard d'échange de données de mesure de consommation électrique utilisé par ladite entité ; de moyens de transmission pour transmettre ledit message à destination de l'entité de gestion via une passerelle et le serveur.

Selon un cinquième aspect de l'invention, l'invention concerne un programme d'ordinateur, comprenant des instructions pour mettre en oeuvre, par un dispositif, le procédé selon le deuxième aspect lorsque ledit programme est exécuté par un processeur dudit dispositif.

Selon un sixième aspect de l'invention, l'invention concerne des moyens de stockage stockant un programme d'ordinateur comprenant des instructions pour mettre en oeuvre, par un dispositif, le procédé selon le deuxième aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de système de communication par courants porteurs en ligne dans lequel est mise en oeuvre l'invention ;
- la Fig. 2 illustre schématiquement un exemple d'architecture matérielle d'un module de traitement; et,
- la Fig. 3 illustre schématiquement un procédé, exécuté dans le système de communication par courants porteurs en ligne, pour transmettre un message de rupture d'alimentation d'un compteur vers une entité de gestion en cas de rupture de l'alimentation dudit compteur.

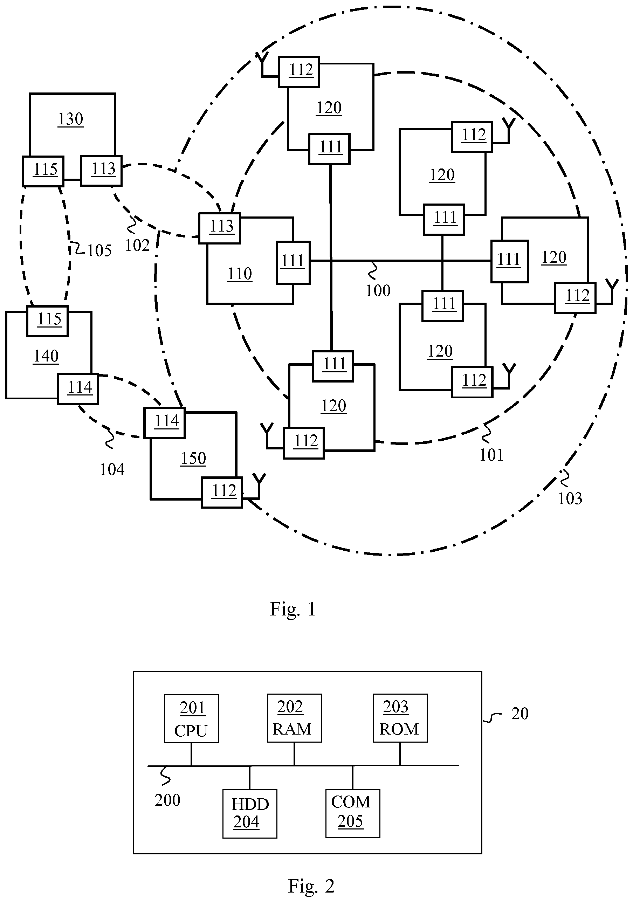

La **Fig. 1** illustre schématiquement un exemple de système de communication par courants porteurs en ligne dans lequel est mise en oeuvre l'invention.

Le système de communication de la Fig. 1, de type AMM, comporte une entité de gestion 130 et une pluralité de compteurs 120. L'entité de gestion 130 est notamment en charge de collecter des informations transmises par les compteurs 120, telles que des informations de relevés de consommation électrique d'installations électriques que lesdits compteurs 120 sont en charge de surveiller. Pour permettre auxdits compteurs 120 de transmettre lesdites informations à l'entité de gestion 130, des communications par courants porteurs en ligne (dites communications CPL) sont établies entre chacun desdits compteurs 120 et un concentrateur de données 110. Le système de communication comporte typiquement une pluralité de concentrateurs de données 110, un seul étant représenté sur la Fig. 1. A chaque concentrateur de données 110 est connectée, de manière logique, une pluralité de compteurs 120, chaque concentrateur de données 110 servant ainsi de relais entre lesdits compteurs 120 qui lui sont connectés et l'entité de gestion 130.

Un réseau CPL 101 est ainsi formé entre chaque concentrateur de données 110 et la pluralité de compteurs 120 qui lui est connectée. Ce réseau CPL 101 s'appuie sur un réseau d'alimentation électrique 100 servant à alimenter en électricité les installations électriques que lesdits compteurs 120 sont en charge de surveiller. Chaque compteur 120 comporte ainsi une interface 111 de communication CPL permettant de communiquer via le réseau CPL 101. De même, chaque concentrateur de données 110 comporte une telle interface 111 de communication CPL permettant de communiquer via le réseau CPL 101. Selon un mode de réalisation, le réseau CPL 101 est conforme au protocole PRIME. Selon un autre exemple de réalisation, le réseau CPL 101 est conforme au protocole G3-PLC.

Pour permettre de relayer les informations transmises par les compteurs 120 à destination de l'entité de gestion 130, chaque concentrateur de données 110 comporte en outre une interface 113 de communication avec un réseau de communication 102, auquel est aussi connectée l'entité de gestion 130. Etant donné que les concentrateurs de données 110 peuvent être typiquement installés au sein de postes de transformation du réseau d'alimentation électrique 100, le réseau de communication 102 est préférentiellement un réseau de télécommunication sans-fil. Selon un mode de réalisation, le réseau de communication 102 est conforme au standard UMTS (« Universal Mobile Télécommunications System » en anglais). Selon un autre mode de réalisation, le réseau de communication 102 est conforme au standard LTE (« Long Term Evolution » en anglais).

Dans le cadre de la présente invention, chaque compteur 120 comporte en outre une interface de communication 112 avec un réseau de communication sans-fil 103 de type LPWAN (« Low-Power Wide Area Network » en terminologie anglo-saxonne), que nous appelons réseau LPWAN par la suite, tel qu'utilisé dans l'Internet des Objets (« Internet of Things » en terminologie anglo-saxonne). Pour interconnecter des objets, appelés objets communicants, dans le cadre de l'Internet des Objets, des passerelles de collecte situées sur des points géographiquement hauts sont géographiquement déployées. Hors opérations de maintenance, ces passerelles sont fixes et permanentes. On peut par exemple citer sur ce modèle les réseaux LPWAN SigFox ou ThingPark. Par exemple, en France, le réseau LPWAN SigFox s'appuie sur les points hauts des sites de transmission de TDF (« Télédiffusion De France »). Ces passerelles de collecte communiquent avec les objets communicants grâce à des systèmes de communication radio à faible puissance et à longue portée de type LPWAN. Ainsi, pour fournir un autre moyen pour permettre auxdits compteurs 120 de transmettre des informations à l'entité de gestion 130, des communications de type LPWAN sont établies entre chacun desdits compteurs 120 et une passerelle de collecte 150. A noter que les compteurs 120 rattachés à un même concentrateur de données 110 peuvent être rattachés à des passerelles de collecte 150 distinctes. Le système de communication comporte typiquement une pluralité de passerelles de collecte 150, une seule étant représentée sur la Fig. 1. A chaque passerelle de collecte 150 est connectée, de manière logique, une pluralité de compteurs 120.

Chaque passerelle de collecte 150 sert ainsi de relais entre lesdits compteurs 120 qui lui sont connectés et un serveur LPWAN 140, qui lui-même assure un relais avec l'entité de gestion 130 via un réseau de communication 105 de type IP (« Internet Protocol » en terminologie anglo-saxonne, tel que défini dans le document normatif RFC 791), tel que l'Internet. Ainsi, chaque passerelle de collecte 150 comporte une interface de communication 112 avec le réseau LPWAN 103 pour lui permettre de communiquer avec les compteurs 120 et une interface de communication 114 avec un réseau de communication fédérateur 104 pour lui permettre de communiquer avec le serveur LPWAN 140. Le serveur LPWAN 140 comporte alors une interface de communication 114 pour lui permettre de communiquer, via le réseau de communication fédérateur 104, avec une pluralité de passerelles de collecte 150, et une interface 115 de communication avec le réseau de communication 105 de type IP pour lui permettre de communiquer avec l'entité de gestion 130.

Préférentiellement, le réseau LPWAN 103 est un réseau étendu à longue portée et à faible consommation d'énergie LoRaWAN (« Long Range Wide-Area Network » en terminologie anglo-saxonne), aussi connu sous l'appellation « LoRa » du nom d'une alliance faisant la promotion de technologies de réseaux étendus à longue portée LoRaWAN.

L'entité de gestion 130 comporte ainsi une interface 113 de communication avec le réseau de communication 102 lui permettant de communiquer avec une pluralité de concentrateurs de données 110, et une interface 115 de communication avec le réseau de communication 105 de type IP pour lui permettre de communiquer avec le serveur LPWAN 140. L'entité de gestion 130 est préférentiellement conforme à l'ensemble de standards IEC 62056, *i.e.* aux spécifications DLMS (« Device Language Message Spécification » en terminologie anglo-saxonne) et COSEM (« Companion Spécification for Energy Metering » en terminologie anglo-saxonne).

Les communications entre l'entité de gestion 130 et le serveur LPWAN 140 sont préférentiellement assurées via un réseau privé virtuel VPN (« Virtual Private Network » en terminologie anglo-saxonne).

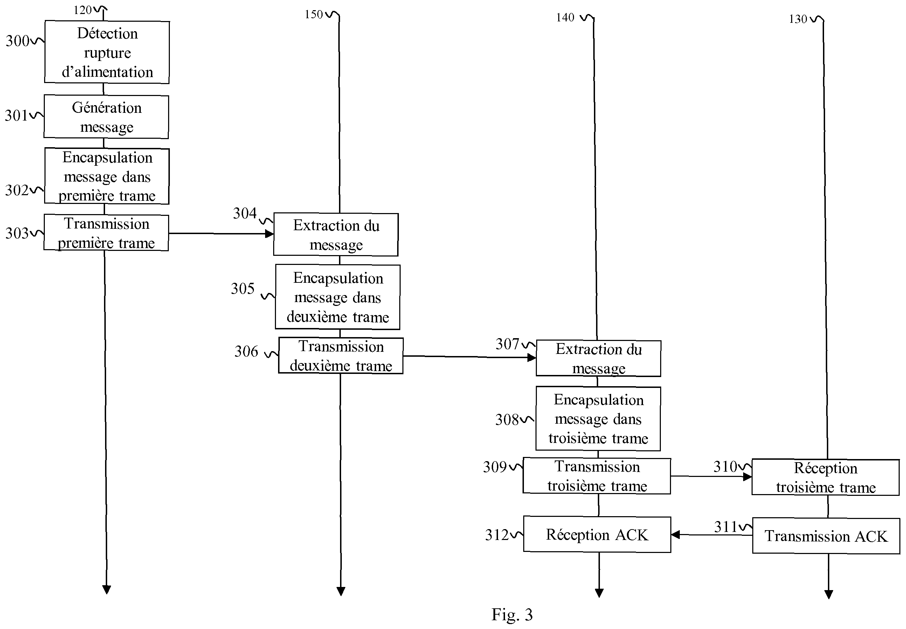

Un tel agencement offre alors deux alternatives pour permettre aux compteurs 120 de transmettre des informations à l'entité de gestion 130. Le réseau LPWAN 103 peut être utilisé en cas de défaillance du réseau CPL 101. Par exemple, comme nous le verrons par la suite, le réseau LPWAN 103 est utilisé par un compteur 120 en cas de rupture d'alimentation électrique dudit compteur 120. Cet aspect est détaillé par la suite en relation avec la Fig. 3.

Il convient de noter que chaque compteur 120 peut se connecter au réseau LPWAN 103 lors d'une phase d'initialisation, permettant ainsi de pouvoir utiliser le réseau LPWAN 103 au besoin.

En variante, chaque compteur 120 peut se connecter au réseau LPWAN 103 au moment où ledit compteur 120 a besoin de basculer vers le réseau LPWAN 103 suite à une rupture d'alimentation électrique. En cas de réalimentation du compteur 120, ledit compteur 120 peut alors se déconnecter du réseau LPWAN 103.

Chaque entité du système de la Fig. 1, que ce soit un concentrateur de données 110, un compteur 120, une passerelle de collecte 150, le serveur LPWAN 140, ou l'entité de gestion 130 comprend un module de traitement 20 permettant à ces entités de participer à une mise en oeuvre de l'invention.

La **Fig. 2** illustre schématiquement un exemple d'architecture matérielle du module de traitement 20.

Le module de traitement 20 comprend alors, reliés par un bus de communication 200: un processeur ou CPU 201 ; une mémoire vive RAM 202 ; une mémoire morte ROM 203 ; une unité de stockage ou un lecteur de support de stockage, tel qu'un lecteur de cartes SD 204 ; un ensemble d'interfaces de communication 205 permettant au module de traitement 20 de communiquer avec d'autres entités du système de la Fig. 1. Lorsque le module de traitement 20 est compris dans un compteur 120, l'ensemble d'interfaces de communication 205 comprend l'interface de communication 111 vers le réseau CPL 101 et l'interface de communication 112 vers le réseau LPWAN 103. Lorsque le module de traitement 20 est compris dans un concentrateur de données 110, l'ensemble d'interfaces de communication 205 comprend l'interface de communication 111 vers le réseau CPL 101 et l'interface de communication 113 vers le réseau de communication 102. Lorsque le module de traitement 20 est compris dans une passerelle de collecte 150, l'ensemble d'interfaces de communication 205 comprend l'interface de communication 112 vers le réseau LPWAN 103 et l'interface de communication 114 vers le réseau de communication fédérateur 104. Lorsque le module de traitement 20 est compris dans le serveur LPWAN 140, l'ensemble d'interfaces de communication 205 comprend l'interface de communication 115 vers le réseau de communication 105 de type IP et l'interface de communication 114 vers le réseau de communication fédérateur 104. Lorsque le module de traitement 20 est compris dans l'entité de gestion 130, l'ensemble d'interfaces de communication 205 comprend l'interface de communication 115 vers le réseau de communication 105 de type IP et l'interface de communication 113 vers le réseau de communication 102.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication. Lorsque l'entité (i.e. le concentrateur de données 110, un compteur 120, une passerelle de collecte 150, le serveur LPWAN 140, ou l'entité de gestion 130) est mise sous tension, le processeur 201 est capable de lire de la RAM 202 des instructions et de les exécuter. Ces instructions forment un programme d'ordinateur causant la mise en oeuvre, par le processeur 201 d'une partie du procédé décrit en relation avec la Fig. 3 concernant ladite entité.

Tout ou partie du procédé décrit en relation avec la Fig. 3 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

La Fig. 3 illustre schématiquement un procédé, exécuté dans le système de la Fig. 1, pour transmettre un message de rupture d'alimentation d'un compteur 120 vers l'entité de gestion 130 en cas de rupture de l'alimentation dudit compteur 120. Dans ce procédé, le message de rupture d'alimentation est transmis en mode « push ». En mode « push » c'est le compteur 120 qui décide de transmettre le message de rupture d'alimentation à destination de l'entité de gestion 130 sans avoir reçu préalablement de requête pour ce faire.

Chaque compteur 120 comprend une alimentation électrique générale et une alimentation électrique de secours. L'alimentation électrique générale est fournie par le réseau d'alimentation électrique 100. L'alimentation électrique de secours est fournie par une pile ou un condensateur, une telle source d'alimentation électrique ayant une durée de vie courte (i.e. quelques secondes). Chaque compteur 120 passe sur son alimentation électrique de secours en cas de rupture de son alimentation électrique générale.

Dans une étape 300, le module de traitement 20 du compteur 120 détecte une rupture de l'alimentation électrique générale du compteur 120. Dans un mode de réalisation, le compteur 120 comprend un détecteur de rupture d'alimentation électrique tel qu'un capteur de courant à effet hall, un capteur de courant à effet Néel ou un enroulement de Rogowsky. Ce détecteur de rupture d'alimentation électrique supervise l'alimentation électrique générale du compteur 120 et est apte à transmettre une information au module de traitement 20 du compteur 120 dès qu'une rupture d'alimentation électrique générale est détectée. Dans un autre mode de réalisation, le détecteur de rupture d'alimentation électrique est un dispositif de mesure de tension qui mesure une tension électrique aux bornes de l'alimentation électrique de secours. La tension électrique aux bornes de l'alimentation électrique de secours est stable tant que l'alimentation générale fonctionne. Lorsqu'une coupure d'alimentation électrique générale se produit, la tension aux bornes de l'alimentation électrique de secours baisse. Lorsque cette tension électrique est inférieure à une tension prédéfinie, le détecteur de rupture d'alimentation électrique transmet une information au module de traitement 20 du compteur 120.

Dans une étape 301, le module de traitement 20 du compteur 120 génère un message de rupture d'alimentation électrique destiné à l'entité de gestion 130. Dans un mode de réalisation, ce message est conforme au format d'un message DLMS dénommé *DataNotification,* tel que défini dans le Livre Vert (« Green Book » en anglais) édité par l'association *DLMS User Association.*

Dans une étape 302, le module de traitement 20 du compteur 120 encapsule le message dans une première trame conforme au protocole de communication utilisé sur le réseau LPWAN 103. Lorsque le réseau LPWAN 103 est un réseau LoRa, ladite première trame est conforme au protocole LoRaWAN.

Dans une étape 303, le module de traitement 20 transmet ladite première trame à destination de l'entité de gestion 130 via la passerelle de collecte 150.

Dans une étape 304, le module de traitement 20 de ladite passerelle de collecte 150 reçoit la première trame et extrait le message de la première trame.

Dans une étape 305, le module de traitement 20 de ladite passerelle de collecte 150 insère ce message dans une deuxième trame adaptée au réseau de communication fédérateur 104.

Dans une étape 306, le module de traitement 20 de la passerelle de collecte 150 transmet la deuxième trame à destination de l'entité de gestion 130 via le serveur LPWAN 140.

Dans une étape 307, le module de traitement 20 du serveur LPWAN 140 reçoit la deuxième trame et extrait le message de la deuxième trame.

Dans une étape 308, le module de traitement 20 du serveur LPWAN 140 insère le message dans une troisième trame adaptée au réseau de communication de type IP 105.

Dans une étape 309, le module de traitement 20 du serveur LPWAN 140 transmet cette trame à destination de l'entité de gestion 130.

Dans une étape 310, le module de traitement 20 de l'entité de gestion 130 extrait le message de la troisième trame. Lors de l'étape 310, le module de traitement 20 de l'entité de gestion 130 stocke dans sa mémoire que le compteur 120 n'est plus alimenté.

Dans une étape 311, le module de traitement 20 de l'entité de gestion 130 acquitte le message en transmettant un accusé de réception au serveur LPWAN 140 via le réseau de communication de type IP 105.

Dans une étape 312, le module de traitement 20 du serveur LPWAN 140 reçoit l'accusé de réception.

Dans un mode de réalisation, préalablement à l'exécution de l'algorithme de la Fig. 3, *i.e.* en dehors de tout dysfonctionnement du réseau CPL 101, le compteur 120 crée, avec l'entité de gestion 130 via le réseau CPL 101, un contexte applicatif de chiffrement. Ce contexte applicatif de chiffrement, créé de manière cohérente au sein dudit compteur 120 et de l'entité de gestion 130, permet d'utiliser des clefs de chiffrement/déchiffrement, d'authentification et de signature destinées à des opérations de sécurisation de messages échangés entre le compteur 120 et l'entité de gestion 130. Ces clefs sont donc partagées entre l'entité de gestion 130 et ledit compteur 120. Ces clefs peuvent être pré-renseignées en usine, ou à l'installation, au sein dudit compteur 120 et de l'entité de gestion 130 (en association avec un identifiant du compteur 120). Ces clefs peuvent aussi en variante être échangées entre ledit compteur 120 et l'entité de gestion 130, lors de l'établissement dudit contexte applicatif, selon des techniques connues de l'homme du métier.

Dans ce mode de réalisation, le message généré lors de l'étape 301 est chiffré grâce au contexte applicatif de chiffrement défini via le réseau de communication par courants porteurs en ligne 101. Ainsi, le message transmis sur le réseau LPWAN 103, sur le réseau de communication fédérateur 104 et sur le réseau de communication de type IP 105 est chiffré selon un contexte applicatif de chiffrement défini via un réseau de communication par courants porteurs en ligne 101.

L'entité de gestion 130 est la seule entité du système de la Fig. 1 à connaître le contexte de chiffrement en dehors du compteur 120. Les autres entités et notamment les entités utilisées lors de la transmission du message par l'intermédiaire du réseau LPWAN 103 n'ont aucune connaissance de ce contexte de chiffrement et ne peuvent donc pas interpréter le contenu du message. Seule l'entité de gestion 130 peut déchiffrer le message généré par le compteur 120. La passerelle de collecte 150 et le serveur LPWAN 140 n'effectuent pas de déchiffrement du message.

On peut noter que les systèmes de communication basés sur des technologies LPWAN permettent aussi de chiffrer des messages qui transitent via des passerelles LPWAN telles que les passerelles de collecte 150. Des clefs de chiffrement/déchiffrement, d'authentification, de signature destinées aux transmissions LPWAN sont alors utilisées telles que par exemple la clef dénommée *AppSKey* utilisée sur les réseaux LoRaWAN. Dans le cadre de la présente invention, le fait d'utiliser dans le cadre des transmissions sur le réseau LPWAN 103 des messages chiffrés avec des clefs destinées aux transmissions sur le réseau CPL 101 permet de se passer du chiffrement/déchiffrement offert par les technologies LPWAN. Par ailleurs, en assurant lui-même son chiffrement, un opérateur qui maîtriserait des réseaux CPL mais pas des réseaux LPWAN éviterait des fuites d'informations si ses données transitent sur un réseau LPWAN.

Dans un mode de réalisation, suite à la détection de la rupture de l'alimentation électrique générale lors de l'étape 300 et tant que son alimentation électrique de secours offre une tension suffisante, le module de traitement 20 du compteur 120 contrôle régulièrement son interface de communication CPL 111. Si pendant cette période, le compteur 120 reçoit au moins un message de la part de l'entité de gestion 130, d'un concentrateur de données 110 ou d'un autre compteur 120 via l'interface de communication CPL 111, le module de traitement 20 du compteur 120 considère que le réseau CPL 101 peut aussi être utilisé pour transmettre le message de rupture d'alimentation électrique. Ainsi plutôt que de transmettre ce message exclusivement en utilisant le réseau LPWAN 103, le compteur 120 transmet en parallèle ce message sur le réseau CPL 101. Le module de traitement 20 du compteur 120 insère donc ce message dans une quatrième trame compatible avec le protocole utilisé sur le réseau CPL 101 pour être transmis sur le réseau CPL 101. Ce message, après réception par le concentrateur de données 110, est extrait de la quatrième trame puis inséré dans une cinquième trame compatible avec le réseau de communication 102 pour être transmis sur le réseau 102. En transmettant deux fois le même message sur deux chemins différents, on multiplie les chances qu'au moins un de ces messages soit reçu.

## Revendications

1. Procédé de transmission d'un message représentatif d'une détection d'une rupture d'alimentation électrique d'un compteur électrique intelligent, dit compteur, à destination d'une entité de gestion (130) dans un système de communication comportant en outre un premier réseau (101) reliant des compteurs (120) à un concentrateur de données (110) et un deuxième réseau de communication (102) reliant le concentrateur de données à l'entité de gestion, le système de communication comportant en outre un troisième réseau (103) reliant les compteurs à une passerelle de collecte (150), dite passerelle, un quatrième réseau (104) reliant la passerelle à un serveur (140), et un cinquième réseau (105), reliant le serveur à l'entité de gestion, chaque compteur comprenant une alimentation électrique générale et une alimentation électrique de secours, et passant sur son alimentation électrique de secours en cas de rupture de son alimentation électrique générale, **caractérisé en ce que**, lorsqu'un compteur détecte (300) une rupture de son alimentation électrique générale, le procédé comprend :
générer (301), par ledit compteur, un message de rupture d'alimentation électrique destiné à l'entité de gestion, ledit message étant conforme à au moins un standard d'échange de données de mesure de consommation électrique utilisé par ladite entité ;
transmettre (303), par ledit compteur, ledit message à destination de l'entité de gestion via la passerelle et le serveur, le message étant encapsulé dans une première trame lors de son passage par le troisième réseau (302), dans une deuxième trame lors de son passage par le quatrième réseau (305) et dans une troisième trame lors de son passage sur le cinquième réseau (308) ; et
transmettre en parallèle ledit message sur le premier réseau lorsque le compteur reçoit via ce premier réseau au moins un message de la part de l'entité de gestion, d'un concentrateur de données ou d'un autre compteur suite à la détection de la rupture d'alimentation.

2. Procédé selon la revendication 1, **caractérisé en ce que** le message est conforme aux standards IEC 62056.

3. Procédé selon l'une quelconque des revendications précédentes, **caractérisé en ce que** le troisième réseau est un réseau étendu à longue portée et à faible consommation d'énergie conforme au protocole LoRaWAN.

4. Procédé selon l'une quelconque des revendications précédentes, **caractérisé en ce que** le premier réseau est conforme aux spécifications PRIME.

5. Procédé selon l'une quelconque des revendications 1 à 3, **caractérisé en ce que** le premier réseau est conforme au standard G3-PLC.

6. Procédé selon l'une quelconque des revendications précédentes, **caractérisé en ce que** l'entité de gestion transmet un accusé de réception à destination du serveur par l'intermédiaire du cinquième réseau suite à la réception dudit message.

7. Système de transmission d'un message représentatif d'une détection d'une rupture d'alimentation électrique d'un compteur électrique intelligent, dit compteur, à destination d'une entité de gestion (130) dans un système de communication comportant en outre un premier réseau (101) reliant des compteurs (120) à un concentrateur de données (110) et un deuxième réseau de communication (102) reliant le concentrateur de données à l'entité de gestion, le système de communication comportant en outre un troisième réseau (103) reliant les compteurs à une passerelle de collecte (150), dite passerelle, un quatrième réseau (104) reliant la passerelle à un serveur (140), et un cinquième réseau (105), reliant le serveur à l'entité de gestion, chaque compteur comprenant une alimentation électrique générale et une alimentation électrique de secours, et passant sur son alimentation électrique de secours en cas de rupture de son alimentation électrique générale, **caractérisé en ce que** le système comprend,
dans chaque compteur :
des moyens de détection (300) d'une rupture de l'alimentation électrique générale dudit compteur ; et,
des moyens de génération (301) pour générer un message de rupture d'alimentation électrique destiné à l'entité de gestion lorsqu'une rupture de l'alimentation électrique générale est détectée, ledit message étant conforme à au moins un standard d'échange de données de mesure de consommation électrique utilisé par ladite entité ;
des moyens de transmission (302, 303, 304, 305, 306, 307, 308, 309) pour transmettre le message à destination de l'entité de gestion via la
passerelle et le serveur et pour transmettre en parallèle ledit message sur le premier réseau lorsque le compteur reçoit au moins un message de la part de l'entité de gestion, d'un concentrateur de données ou d'un autre compteur suite à la détection de la rupture d'alimentation; et,
dans l'entité de gestion, des moyens de transmission (311) pour transmettre un accusé de réception à destination du serveur par l'intermédiaire du cinquième réseau suite à la réception dudit message.

8. Dispositif de transmission d'un message représentatif d'une détection d'une rupture d'alimentation électrique d'un compteur électrique intelligent, dit compteur, à destination d'une entité de gestion (130) dans un système de communication comportant en outre un premier réseau (101) reliant des compteurs (120) à un concentrateur de données (110) et un deuxième réseau de communication (102) reliant le concentrateur de données à l'entité de gestion, le système de communication comportant en outre un troisième réseau (103) reliant les compteurs à une passerelle de collecte (150), dite passerelle, un quatrième réseau (104) reliant la passerelle à un serveur (140), et un cinquième réseau (105), reliant le serveur à l'entité de gestion, chaque compteur comprenant une alimentation électrique générale et une alimentation électrique de secours, et passant sur son alimentation électrique de secours en cas de rupture de son alimentation électrique générale, **caractérisé en ce que** le dispositif comprend :
des moyens de détection (300) pour détecter une rupture de l'alimentation électrique générale du compteur :
des moyens de génération (301) pour générer un message de rupture d'alimentation électrique destiné à l'entité de gestion, ledit message étant conforme à au moins un standard d'échange de données de mesure de consommation électrique utilisé par ladite entité ;
des moyens de transmission (302, 303) pour transmettre ledit message à destination de l'entité de gestion via la
passerelle et le serveur et pour transmettre en parallèle ledit message sur le premier réseau lorsque le compteur reçoit au moins un message de la part de l'entité de gestion, d'un concentrateur de données ou d'un autre compteur suite à la détection de la rupture d'alimentation.

9. Programme d'ordinateur, **caractérisé en ce qu'**il comprend des instructions pour mettre en oeuvre, par un dispositif, le procédé selon la revendication 7 lorsque ledit programme est exécuté par un processeur dudit dispositif.

10. Moyens de stockage, **caractérisés en ce qu'**ils stockent un programme d'ordinateur comprenant des instructions pour mettre en oeuvre, par un dispositif, le procédé selon la revendication 7 lorsque ledit programme est exécuté par un processeur dudit dispositif.

## Patentansprüche

1. Verfahren zur Übertragung einer Nachricht, die eine Erkennung einer Unterbrechung der Stromversorgung eines intelligenten Stromzählers, dem sogenannten Zähler, an eine Verwaltungseinheit (130) in einem Kommunikationssystem darstellt. Ferner umfasst das Kommunikationssystem ein erstes Netzwerk (101), das Zähler (120) mit einem Datenkonzentrator (110) verbindet, und ein zweites Kommunikationsnetzwerk (102), das den Datenkonzentrator mit der Verwaltungseinheit verbindet. Das Kommunikationssystem umfasst außerdem ein drittes Netzwerk (103), das die Zähler mit einem Sammel-Gateway (150), dem sogenannten Gateway, verbindet, ein viertes Netzwerk (104), welches das Gateway mit einem Server (140) verbindet und ein fünftes Netzwerk (105), das den Server mit der Verwaltungseinheit verbindet. Dabei hat jeder Zähler eine allgemeine Stromversorgung und eine Notstromversorgung und schaltet auf seine Notstromversorgung um, wenn seine allgemeine Stromversorgung ausfällt. Dies ist **dadurch gekennzeichnet, dass**, wenn ein Zähler eine Unterbrechung seiner allgemeinen Stromversorgung feststellt (300), das Verfahren Folgendes umfasst: das Erzeugen (301), durch den Zähler, einer Nachricht über die Unterbrechung der Stromversorgung an die Verwaltungseinheit, wobei die Nachricht mit mindestens einem Standard für den Austausch von Daten zur Messung des Stromverbrauchs, der von der Einheit verwendet wird, übereinstimmt; die Übertragung (303) der Nachricht durch den Zähler an die Verwaltungseinheit über das Gateway und den Server, wobei die Nachricht bei ihrem Durchgang durch das dritte Netzwerk (302) in einem ersten Rahmen, bei ihrem Durchgang durch das vierte Netzwerk (305) in einem zweiten Rahmen und bei ihrem Durchgang durch das fünfte Netzwerk (308) in einem dritten Rahmen eingekapselt ist; und parallel die Übertragung der Nachricht auf dem ersten Netzwerk, wenn der Zähler über dieses erste Netzwerk mindestens eine Nachricht von der Verwaltungseinheit, einem Datenkonzentrator oder einem anderen Zähler infolge der Erkennung der Stromunterbrechung empfängt.

2. Verfahren nach Anspruch 1, **dadurch gekennzeichnet, dass** die Nachricht den IEC 62056-Standards entspricht.

3. Verfahren nach einem der vorhergehenden Ansprüche, **dadurch gekennzeichnet, dass** das dritte Netzwerk ein Long-Range Wide Area Network ist und einen geringen Energieverbrauch aufweist, das dem LoRaWAN-Protokoll entspricht.

4. Verfahren nach einem der vorhergehenden Ansprüche, **dadurch gekennzeichnet, dass** das erste Netzwerk den PRIME-Spezifikationen entspricht.

5. Verfahren nach einem der Ansprüche 1 bis 3, **dadurch gekennzeichnet, dass** das erste Netzwerk dem G3-PLC-Standard entspricht.

6. Verfahren nach einem der vorhergehenden Ansprüche, **dadurch gekennzeichnet, dass** die Verwaltungseinheit nach dem Empfang der Nachricht über das fünfte Netzwerk eine Empfangsbestätigung an den Server sendet.

7. System zur Übertragung einer Nachricht, die eine Erkennung einer Unterbrechung der Stromversorgung eines intelligenten Stromzählers, dem sogenannten Zähler, an eine Verwaltungseinheit (130) in einem Kommunikationssystem darstellt. Ferner umfasst das Kommunikationssystem ein erstes Netzwerk (101), das Zähler (120) mit einem Datenkonzentrator (110) verbindet, und ein zweites Kommunikationsnetzwerk (102), das den Datenkonzentrator mit der Verwaltungseinheit verbindet. Das Kommunikationssystem umfasst außerdem ein drittes Netzwerk (103), das die Zähler mit einem Sammel-Gateway (150), dem sogenannten Gateway, verbindet, ein viertes Netzwerk (104), welches das Gateway mit einem Server (140) verbindet und ein fünftes Netzwerk (105), das den Server mit der Verwaltungseinheit verbindet. Dabei hat jeder Zähler eine allgemeine Stromversorgung und eine Notstromversorgung und schaltet auf seine Notstromversorgung um, wenn seine allgemeine Stromversorgung ausfällt. Dies ist **dadurch gekennzeichnet, dass** das System Folgendes umfasst:
In jedem Zähler:
Mittel zur Erkennung (300) einer Unterbrechung der allgemeinen Stromversorgung des Zählers; und,
Mittel zum Erzeugen (301), um eine Nachricht über die Unterbrechung der Stromversorgung an die Verwaltungseinheit zu erzeugen, wenn eine Unterbrechung der allgemeinen Stromversorgung festgestellt wird, wobei die Nachricht mit mindestens einem von der Einheit verwendeten Standard für den Austausch von Daten zur Messung des Stromverbrauchs übereinstimmt;
Mittel zur Übertragung (302, 303, 304, 305, 306, 307, 308, 309), um die Nachricht über das Gateway und den Server an die Verwaltungseinheit zu übertragen und um parallel die Nachricht über das erste Netzwerk zu übertragen, wenn der Zähler mindestens eine Nachricht von der Verwaltungseinheit, einem Datenkonzentrator oder einem anderen Zähler empfängt, infolge der Erkennung der Stromunterbrechung; und,
in der Verwaltungseinheit Mittel zur Übertragung (311), um eine Empfangsbestätigung an den Server über das fünfte Netzwerk nach dem Empfang der Nachricht zu übertragen.

8. Vorrichtung zur Übertragung einer Nachricht, die eine Erkennung einer Unterbrechung der Stromversorgung eines intelligenten Stromzählers, dem sogenannten Zähler, an eine Verwaltungseinheit (130) in einem Kommunikationssystem darstellt. Ferner umfasst das Kommunikationssystem ein erstes Netzwerk (101), das Zähler (120) mit einem Datenkonzentrator (110) verbindet, und ein zweites Kommunikationsnetzwerk (102), das den Datenkonzentrator mit der Verwaltungseinheit verbindet. Das Kommunikationssystem umfasst außerdem ein drittes Netzwerk (103), das die Zähler mit einem Sammel-Gateway (150), dem sogenannten Gateway, verbindet, ein viertes Netzwerk (104), welches das Gateway mit einem Server (140) verbindet und ein fünftes Netzwerk (105), das den Server mit der Verwaltungseinheit verbindet. Dabei hat jeder Zähler eine allgemeine Stromversorgung und eine Notstromversorgung und schaltet auf seine Notstromversorgung um, wenn seine allgemeine Stromversorgung ausfällt. Dies ist **dadurch gekennzeichnet, dass** die Vorrichtung Folgendes umfasst:
Mittel zur Erkennung (300), um eine Unterbrechung der allgemeinen Stromversorgung des Zählers zu erkennen:
Mittel zum Erzeugen (301), um eine Nachricht über die Unterbrechung der Stromversorgung an die Verwaltungseinheit zu erzeugen, wobei die Nachricht mit mindestens einem von der Einheit verwendeten Standard für den Austausch von Daten zur Messung des Stromverbrauchs übereinstimmt;
Mittel zur Übertragung (302, 303), um die Nachricht über das Gateway und den Server an die Verwaltungseinheit zu übertragen und um parallel die Nachricht über das erste Netzwerk zu übertragen, wenn der Zähler mindestens eine Nachricht von der Verwaltungseinheit, einem Datenkonzentrator oder einem anderen Zähler empfängt, infolge der Erkennung der Stromunterbrechung.

9. Computerprogramm, **dadurch gekennzeichnet, dass** es Anweisungen enthält, um durch eine Vorrichtung den Prozess nach Anspruch 7 zu initiieren, wenn das Programm durch einen Prozessor der Vorrichtung ausgeführt wird.

10. Speichermedien, **dadurch gekennzeichnet, dass** sie ein Computerprogramm speichern, das Anweisungen zum Ausführen des Verfahrens nach Anspruch 7 durch eine Vorrichtung umfasst, wenn das Programm von einem Prozessor der Vorrichtung ausgeführt wird.

## Claims

1. Method for transmitting a message representing a detection of a break in electrical supply to a smart electricity meter, referred to as a meter, to a management entity (130) in a communication system furthermore comprising a first network (101) connecting meters (120) to a data concentrator (110) and a second communication network (102) connecting the data concentrator to the management entity, the communication system furthermore comprising a third network (103) connecting the meters to a collecting gateway (150), referred to as a gateway, a fourth network (104) connecting the gateway to a server (140), and a fifth network (105), connecting the server to the management entity, each meter comprising a general electrical supply and a backup electrical supply, and passing to its backup electrical supply in the case of a break in its general electrical supply, **characterised in that**, when a meter detects (300) a break in its general electrical supply, the method comprises:
generating (301), by said meter, an electrical-supply break message intended for the management entity, said message being in accordance with at least one data exchange standard for the measurement of electrical consumption used by said entity;
transmitting (303), by said meter, said message intended for the management entity via the gateway and the server, the message being encapsulated in a first frame when it passes through the third network (302), in a second frame when it passes through the fourth network (305) and in a third frame when passes over the fifth network (308); and
transmitting said message in parallel over the first network when the meter receives, via this first network, at least one message from the management entity, from a data concentrator or from another meter following the detection of the break in supply.

2. Method according to claim 1, **characterised in that** the message is in accordance with the IEC 62056 standards.

3. Method according to any one of the preceding claims, **characterised in that** the third network is a long-range wide area network with low energy consumption in accordance with the LoRaWAN protocol.

4. Method according to any one of the preceding claims, **characterised in that** the first network is in accordance with the PRIME specification.

5. Method according to any one of claims 1 to 3, **characterised in that** the first network is in accordance with the G3-PLC standard.

6. Method according to any one of the preceding claims, **characterised in that** the management entity transmits an acknowledgement of reception to the server by means of the fifth network following the reception of said message.

7. System for transmitting a message representing a detection of a break in electrical supply to a smart electricity meter, referred to as a meter, to a management entity (130) in a communication system furthermore comprising a first network (101) connecting meters (120) to a data concentrator (110) and a second communication network (102) connecting the data concentrator to the management entity, the communication system furthermore comprising a third network (103) connecting the meters to a collecting gateway (150), referred to as a gateway, a fourth network (104) connecting the gateway to a server (140), and a fifth network (105), connecting the server to the management entity, each meter comprising a general electrical supply and a backup electrical supply, and passing to its backup electrical supply in the case of a break in its general electrical supply, **characterised in that** the system comprises,
in each meter:
means (300) for detecting a break in the general electrical supply to said meter; and
generation means (301) for generating an electrical-supply break message intended for the management entity when a break in the general electrical supply is detected, said message being in accordance with at least one data exchange standard for the measurement of electrical consumption used by said entity;
transmission means (302, 303, 304, 305, 306, 307, 308, 309) for transmitting the message to the management entity via the gateway and the server and for transmitting said message in parallel over the first network when the meter receives at least one message from the management entity, from a data concentrator or from another meter following the detection of the break in supply; and
in the management entity, transmission means (311) for transmitting an acknowledgement of reception to the server by means of the fifth network following the reception of said message.

8. Device for transmitting a message representing a detection of a break in electrical supply to a smart electricity meter, referred to as a meter, to a management entity (130) in a communication system furthermore comprising a first network (101) connecting meters (120) to a data concentrator (110) and a second communication network (102) connecting the data concentrator to the management entity, the communication system furthermore comprising a third network (103) connecting the meters to a collecting gateway (150), referred to as a gateway, a fourth network (104) connecting the gateway to a server (140), and a fifth network (105), connecting the server to the management entity, each meter comprising a general electrical supply and a backup electrical supply, and passing to its backup electrical supply in the case of a break in its general electrical supply, **characterised in that** the device comprises,
means (300) for detecting a break in the general electrical supply to said meter;
generation means (301) for generating an electrical-supply break message intended for the management entity, said message being in accordance with at least one data-exchange standard for the measurement of electrical consumption used by said entity;
transmission means (302, 303) for transmitting said message to the management entity via the gateway and the server and for transmitting said message in parallel over the first network when the meter receives at least one message from the management entity, from a data concentrator or from another meter following the detection of the break in supply.

9. Computer program, **characterised in that** it comprises instructions for implementing, by a device, the method according to claim 7 when said program is executed by a processor of said device.

10. Storage means, **characterised in that** they store a computer program comprising instructions for implementing, by a device, the method according to claim 7 when said program is executed by a processor of said device.
